# DEMANDE DE BREVET EUROPEEN

(11) **EP 2 746 996 A1**
(43) Date de publication de la demande: **25.06.2014**
(21) Numéro de dépôt: 12306664.9
(22) Date de dépôt: 21.12.2012
(51) Int. Cl.: G06K 19/07, G06K 19/077

(54) **Support électronique comprenant un élément à puce associé**

(71) Demandeur: Gemalto SA, 92190 Meudon (FR)
(72) Inventeur: Gemeto, Marc, 13705 LA CIOTAT (FR); Martin, Christophe, 13705 LA CIOTAT (FR)

(57) **Abrégé**

L'invention concerne un support électronique (2) comprenant :
- un corps (4);
- un élément (6) à puce électronique (8) détachable du corps, ladite puce électronique (8) incluant des droits d'usage d'un utilisateur (IMSI, Ki, PIN, PUK) ;
- un transpondeur (60) à puce radiofréquence (10-30) stockant des informations, fixé au corps, ledit transpondeur (18, 10-30) étant configuré pour permettre une communication radiofréquence d'informations enregistrées sur la puce radiofréquence (10-30);

Le support se distingue en ce qu'il comprend lesdites informations sont associées à l'élément (6) à puce électronique (8) ou à l'utilisateur et en ce qu'il comprend des moyens de contrôle de la communication desdites informations à un appareil de communication radiofréquence (40).

L'invention concerne également un procédé de personnalisation de ce support électronique.

## Description

L'invention concerne un support électronique comprenant un élément à puce électronique détachable du support et un transpondeur à puce radiofréquence.

Parmi les supports électroniques de ce type, on connaît des cartes à puce comportant un corps de carte, et un élément détachable, comportant une puce électronique, telle qu'une carte SIM (« Subscriber Identity Module » en langue anglaise) ou une carte universelle à circuit intégré (« Universal Integrated Circuit Card » en langue anglaise), cet élément présentant un format plus petit que le format du corps de carte et étant joint au corps de carte de façon détachable.

Le brevet FR 2794264 A1 (GEMPLUS CARD INT) décrit une telle carte à puce détachable.

Typiquement, une telle carte à puce comporte une zone imprimée ou une étiquette sur laquelle sont imprimées des données, telles que des moyens d'identification liés à la puce électronique destinées à être transmises à la puce électronique, par l'intermédiaire d'un appareil de communication mobile connecté à cette puce électronique, par exemple pour autoriser un accès à un service de télécommunications.

Ces données comportent par exemple une clé personnelle de déverrouillage (ou PUK, pour « PIN unlock key » en langue anglaise) de la puce. Typiquement, cette clé est transmise à l'appareil de communication mobile par l'intermédiaire d'une interface telle qu'un clavier ou un écran tactile.

Cependant, cette clé se présente généralement sous la forme d'une longue chaîne de caractères alphanumériques. Il existe un risque que cette clé soit transmise à l'appareil de communication mobile de façon erronée, ce qui peut avoir des conséquences adverses sur le fonctionnement ultérieur de la puce électronique.

La demande de brevet WO 02/101641 décrit une carte avec un premier module détachable et un second module solidaire du support. Un des deux modules est du type sans contact et comprend une puce et une antenne. Les premiers et seconds modules comprennent des données communes.

Il existe un besoin pour un support à puce tel une carte, comportant un corps et un élément à puce détachable de ce corps, le corps comportant un support d'enregistrement d'informations (ou mémoire) présentant une fiabilité et une facilité d'utilisations accrues et un coût réduit. Ce support doit permettre une restitution aisée de l'information sans erreur ; De préférence, la restitution peut être sécurisée.

D'autre part, les inventeurs ont ressenti un besoin de stockage et de communication aisé d'informations notamment personnelles à un tiers et/ou de contrôle éventuellement sécurisé de cette communication et/ou de modification des données à communiquer.

L'invention vise à proposer des solutions individuelles ou communes à ces besoins.

Dans son principe, une solution technique selon un aspect peut consister dans la fabrication d'un corps de carte à puce avec une fixation ou incrustation d'une puce sans-contact (notamment type RFID)et d'une antenne et puis personnaliser certaines données dans cette puce sans-contact qui sont uniquement liés à la carte SIM comme l'identifiant de carte SIM et/ou le PUK et/ou le PIN code et/ou données personnelles clients afin qu'ils peuvent être facilement transférés vers le téléphone mobile de l'utilisateur ou consultés par l'intermédiaire de tout autre périphérique en toute sécurité.

Lorsque l'utilisateur lit les données à l'aide de son téléphone portable avec la carte SIM en fonctionnement, la puce sans contact du support sera en mesure de transférer en toute sécurité toutes les données puisqu'il reconnaîtra un identifiant unique de carte SIM ou un code prédéfini. Si la carte SIM est perdue ou ne fonctionne ne pas, les données pourront être toujours accessibles à partir du téléphone mobile de l'utilisateur ou par d'autres appareils de lecture sans contact avec une procédure plus sûre.

A cet effet, l'invention concerne un support électronique comprenant :
- un corps, un élément à puce électronique détachable du corps, ladite puce électronique incluant des droits d'usage d'un utilisateur tels que l'IMSI, Ki, PIN, PUK, droit d'accès, droits d'un service financier, droit de paiement prépayé,
- un transpondeur à puce radiofréquence stockant des informations, fixé au corps, ledit transpondeur étant configuré pour permettre une communication radiofréquence d'informations enregistrées sur la puce radiofréquence ;

Le support électronique se distingue en ce que lesdites informations sont associées à l'élément à puce électronique ou à l'utilisateur et en ce qu'il comprend des moyens de contrôle de la communication desdites informations à un appareil de communication radiofréquence.

En stockant des informations notamment de sécurité relatives ou associées à l'élément à puce électronique (ou la puce électronique) à l'intérieur du transpondeur à puce radiofréquence fixé au corps, le transfert automatique de ces données, au moyen du transpondeur radiofréquence, vers un appareil de communication mobile, est plus simple et plus fiable que lorsque ce transfert est réalisé au moyen d'une interface de saisie manuelle telle qu'un clavier ou un écran tactile. Le risque d'une erreur de transmission de ces données est ainsi réduit.
- Selon un aspect, les informations peuvent comprendre des informations de sécurité telle qu'une clé personnelle de déverrouillage (PUK) de la puce électronique.
- Selon un autre aspect, les informations peuvent comprendre des informations personnelles de carte de visite de l'utilisateur, des informations d'urgence, des informations de secours, des informations vitales propres à l'utilisateur comme groupe sanguin ou toute information choisis par l'utilisateur.
- Selon un autre aspect, les informations peuvent comprendre des informations permettant de joindre le prestataire du droit d'usage, notamment adresse internet (URL), numéro de téléphone.
- Selon un autre aspect, le corps constitue un corps de carte à puce, un corps de carte de visite, une feuille de lettre ou une enveloppe.
- Selon un autre aspect, la feuille de lettre ou l'enveloppe peuvent comprendre une zone prédéfinie ou prédécoupée, ledit transpondeur étant dans cette zone.

Selon un autre aspect, la zone a un format de carte à puce ou de carte de visite.

Par ailleurs, le transpondeur à puce radiofréquence peut comporter un mécanisme ou moyen de contrôle ou moyen de gestion des accès aux informations ; Ce mécanisme, moyen de contrôle ou moyen de gestion ou le transpondeur peut être configuré pour autoriser la communication, par le transpondeur à puce radiofréquence, des informations (notamment de sécurité) contenues dans une mémoire de ce transpondeur ou mémoire liée à ce transpondeur, en réponse à une requête, reçue par le transpondeur radiofréquence, comportant un identifiant (de préférence unique) ou code associé à la puce électronique.
- Selon un autre aspect, le support peut comporter un dispositif de sécurité configuré pour empêcher de délivrer, par le transpondeur, des informations stockées sur la puce radiofréquence tant que l'élément détachable (6) n'a pas été détaché du corps de carte.

L'invention concerne également un procédé de personnalisation du support électronique comprenant un corps, un élément à puce électronique détachable du support, un transpondeur à puce radiofréquence ; Le procédé comprend une étape de stockage de droits d'usage d'un utilisateur dans la puce électronique et une étape de stockage d'informations dans le transpondeur à puce radiofréquence ;

Le procédé se distingue en ce qu'il comporte lesdites informations sont associées à l'élément (6) à puce électronique (8) ou à l'utilisateur et en ce qu'il comprend une étape de configuration du transpondeur de manière à permette une communication contrôlée desdites informations à un appareil de communication radiofréquence.
- Selon un autre aspect, l'étape de configuration du transpondeur permet une communication automatique ou non des informations selon que lesdites informations sont liées à l'élément à puce électronique ou à l'utilisateur dudit élément.

L'invention sera mieux comprise à la lecture de la description qui va suivre, donnée uniquement à titre d'exemple non limitatif et faite en se référant aux dessins sur lesquels :
- la figure 1 est une illustration schématique d'un support conforme à un mode de réalisation de l'invention sous forme de carte à puce ;
- la figure 2 est une illustration schématique, en vue rapprochée, d'une portion d'un dispositif de sécurité de la carte à puce de la figure 1 ;
- la figure 3 est une illustration schématique de la carte à puce de la figure 1, dont un élément détachable est détaché, et utilisé conjointement avec un appareil de communications mobile ;
- la figure 4 est un organigramme d'un exemple de personnalisation de la carte de la figure 1 ;
- la figure 5 est un organigramme d'un exemple d'utilisation de la carte de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

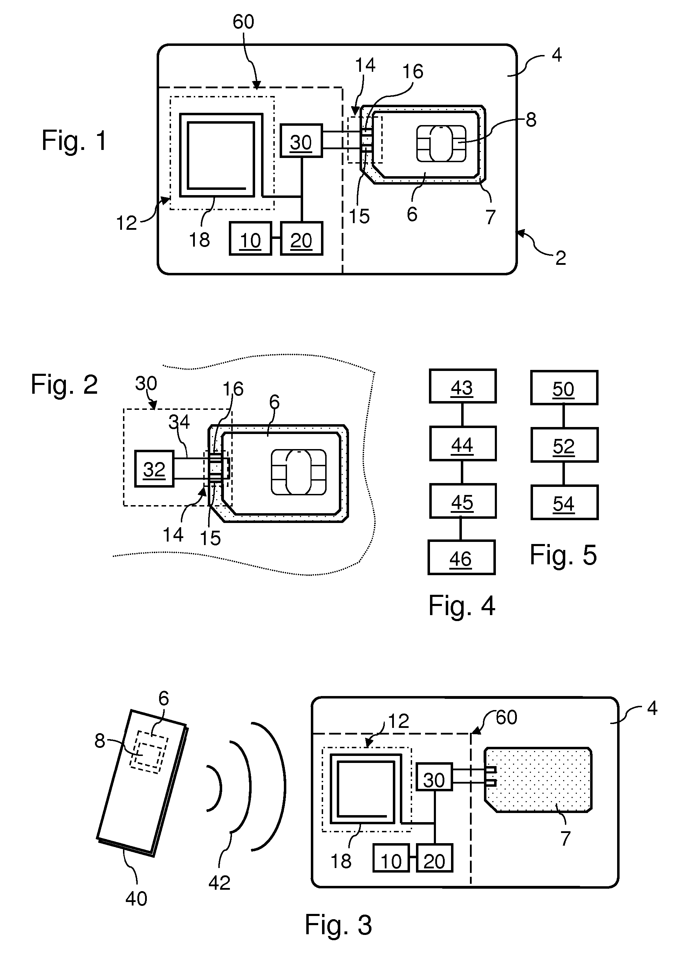

La figure 1 représente le support électronique conforme à un mode de réalisation de l'invention sous forme d'une carte à puce 2. Toutefois selon d'autre exemple, le support peut comprendre ou être sous forme d'autres formes notamment sous forme de feuille plus ou moins cartonnée ou une enveloppe notamment destinée à envoyer par courrier un élément à puce à l'utilisateur par exemple un abonné de service de téléphonie mobile. L'élément à puce peut être fixé dessus.

Le support électronique (2) comprend un corps (4), un élément (6) à puce électronique (8) détachable du corps. La puce électronique (8) inclut des droits d'usage d'un utilisateur (IMSI, Ki, PIN, PUK); Le support électronique comprend également un transpondeur (60) à puce radiofréquence (10-30) stockant des informations, fixé ou intégré au corps ; Ce transpondeur (18, 10-30) est configuré pour permettre une communication radiofréquence d'informations enregistrées sur la puce radiofréquence (10-30).

Selon une caractéristique de ce mode de réalisation, le support électronique comprend des moyens de contrôle de la communication desdites informations à un appareil de communication radiofréquence (40) ; D'autre part, ces informations peuvent être associées à l'élément (6) à puce électronique (8) ou à l'utilisateur.

Le support électronique peut être ici une carte 2 qui comporte un corps de carte 4, un élément détachable 6, attaché au corps 4 et détachable de ce corps 4, la puce électronique 8, comprise dans l'élément 6 et ici équipée d'un module type carte à puce à contacts électriques mais cette puce peut avoir une autre interface de communication notamment de type sans-contact;

Le support électronique comporte un transpondeur (18, 10-30) radiofréquence, compris dans le corps 4 comprend une puce radiofréquence (10-30) comprenant une mémoire 10 d'enregistrement / stockage d'informations et une interface à antenne 18. La carte peut être une carte bancaire ou de téléphonie mobile ou carte d'accès ou autre.

La puce radiofréquence (10,20-30) peut rassembler différents éléments (mémoire 10, contrôleur 32, dispositif de sécurité, antenne 18). La puce du transpondeur radiofréquence peut être un microcontrôleur tel une puce classique radiofréquence de carte sans-contact notamment bancaire ou une puce moins élaborée type RFID ou comprendre un microcontrôleur de type NFC.

Le transpondeur radiofréquence peut être de type passif comme un transpondeur d'une étiquette électronique RFID fonctionnant en réponse à une alimentation électromagnétique et signaux d'un lecteur radiofréquence comme l'appareil 40 ou actif avec une batterie (non représentée) de manière à être capable d'émettre lui-même des signaux radiofréquences notamment de type NFC et d'avoir une fonction lecteur radiofréquence.

Dans un exemple préféré, cette carte 2 est une carte SIM, configurée pour être lue par un appareil de communications mobile, par exemple pour authentifier un abonné à un service de télécommunications. Le corps 4 est, par exemple, réalisé au format « ID-1 », selon les spécifications « ISO/IEC 7810:2003 ». Ce corps 4 présente ici une forme rectangulaire essentiellement plane. Ce corps 4 est réalisé en matière plastique, telle qu'une matière plastique thermodurcissable.

L'élément 6 est une carte mini-SIM qui présente des dimensions inférieures à celle du corps 4. Par exemple, cet élément 6 présente le format « 2FF » défini par la norme « ISO/IEC 7810:2003 ». Cet élément 6 est compris dans le corps 4 et s'étend essentiellement dans un même plan que ce corps 4. Ici, l'élément 6 est placé à l'intérieur d'un évidement 7 ménagé dans le corps 4. Le corps de l'élément 6 est ici réalisé dans un même matériau que le corps 4.

Selon une caractéristique, le support électronique peut comporter un dispositif de sécurité (30) configuré pour empêcher de délivrer, par le transpondeur ((18-10-30), des informations stockées sur la puce radiofréquence (10-30). L'empêchement peut demeurer notamment tant que l'élément détachable (6) n'a pas été détaché du corps (4).

Alternativement, l'empêchement peut être matérialisé autrement par un écran métallique amovible sur l'antenne, un élément conducteur de court-circuit de l'antenne ou de la puce également amovible. Par exemple, deux conducteurs reliant la puce ou deux spires d'antenne débouchent en surface, ces conducteurs sont mis en cours circuit par une encre conductrice grattable, ou une colle conductrice sous l'élément amovible quand l'élément 6 est détaché. L'empêchement peut être créé par action volontaire de l'utilisateur, en ce sens que l'invention peut prévoir un interrupteur (non représenté) ou tout moyen fonctionnellement équivalent sur le support 2 inhibant le fonctionnement du transpondeur si l'utilisateur ne le presse pas ou ne le contacte pas. Ainsi par exemple, des données de carte de visite ne sont transmises que si l'utilisateur fait une action volontaire comme placé son doigt sur cet interrupteur.

Ainsi, ses données ou informations liées ou associées à l'utilisateur comme celles de sa carte de visite ne sont pas subtilisées à son insu (nom, prénom, adresse, profession, titre, téléphone, courriel voire un mini curriculum vitae). Le cas échéant, un capteur d'empreinte (non représenté) compris ou relié au transpondeur 10-30 est prévu sur le corps 4 pour reconnaitre l'empreinte digitale de l'utilisateur stockée dans la puce 10-30. L'empreinte peut être requise par le microcontrôleur 10-30 (ou un sous-ensemble) comme condition préalable pour autoriser une lecture ou une transmission des données ou informations de carte de visite.

L'énergie servant à capter l'empreinte peut provenir d'une batterie intégrée notamment souple ou du lecteur radiofréquence 40.

L'empêchement (ou le contrôle) peut être géré (ou exercé) par des moyens logiques 20 ou 30 qui contrôlent l'accès à des informations de sécurité comme le code PUK stocké en mémoire 10, comme décrit ultérieurement. En effet, l'accès peut être conditionné à un code d'accès ou signal quelconque à recevoir du lecteur / terminal 40. Ce code ou signal peut être stocké dans la puce 8 à la personnalisation électrique. A l'interrogation du transpondeur pour récupérer le code de sécurité PUK, une application dans l'appareil (ou l'élément à puce), sélectionnée par l'utilisateur, aura par exemple prélevé ce code dans la carte SIM à la première mise en route du téléphone dans une phase d'initialisation. Alternativement, ce code est prélevé, sans le PUK dans le transpondeur radiofréquence 10-30 dans un champ prédéfini sélectionné par une application par exemple désignée « initialisation de la récupération du code PUK ». L'information en question ici PUK peut ensuite être récupérée par l'application désignée par exemple « récupération de code PUK au cours de laquelle, il sera proposé à l'utilisateur d'approcher le transpondeur dans le champ de l'appareil 40 et de lancer la lecture NFC comme indiquée précédemment par une requête de lecture accompagnée du code d'accès. Cela évite d'avoir dans l'appareil le code PUK directement en cas de vol de l'appareil.

L'application déclenche ensuite la partie lecteur NFC de l'appareil pour effectuer une requête d'interrogation du transpondeur pour aller récupérer le code PUK en accompagnant la requête du code d'accès. La trame d'onde radiofréquence émise par l'appareil radiofréquence comprend une partie véhiculant le code d'accès (notamment en fin du train d'onde).

Le transpondeur reçoit ce code et cette requête de lecture ou un message de demande de transmission du code PUK ; Il décode l'ensemble et retourne automatiquement les informations de sécurité (ou informations sensibles) PUK stockées dans une partie, fichier, répertoire, champ correspondant à ce code d'accès. Ce code d'accès peut être spécifique à l'utilisateur ou à un ensemble d'utilisateurs partageant de code.

Dans l'exemple illustré, la carte 2 peut comporter facultativement ici une liaison mécanique 14, qui attache le corps 4 à l'élément 6 à puce 8. Cette liaison 14 comporte ici deux liaisons sécables 15 et 16, configurées pour faciliter la séparation du corps 4 et de l'élément 6 sans outil de découpe. Cette liaison 14 est ainsi destructible, c'est-à-dire qu'une fois que l'élément 6 est détaché du corps 4, cet élément 6 ne peut plus être à nouveau attaché au corps 4 par cette même liaison 14. Ces liaisons 15 et 16 sont par exemple formées d'un même matériau que le corps 4 et le corps de l'élément 6. Ces corps et la liaison 14 sont, par exemple, formés lors d'une même étape d'un procédé de moulage par injection.

La mémoire de stockage 10 peut être non-volatile, tel qu'une mémoire flash. Cette mémoire 10 est ici incorporée dans le corps 4. Cette mémoire 10 peut être ici notamment configurée pour recevoir des données ou informations de sécurité (relatives à la puce 8, telles qu'une clé personnelle de déverrouillage PUK de la puce 8. Dans cet exemple, les données ou informations de sécurité peuvent comporter une clé personnelle de déverrouillage PUK.

L'invention peut aussi avantageusement prévoir de configurer la mémoire 10 et/ou le contrôleur 30, 32 et/ou le module de gestion d'accès pour recevoir, par exemple lors d'une personnalisation de la carte 2, des données ou informations personnelles (ou données de carte de visite), comme une carte de visite virtuelle comportant des coordonnées personnelles et/ou professionnelles, d'un utilisateur de la carte 2. Cette mémoire 10 peut également comporter comme indiqué précédemment un lien URL (« Uniform Resource Locator » en langue anglaise) ou un numéro de téléphone pointant vers un service d'assistance technique de l'opérateur ayant fourni la carte 2 à l'utilisateur, afin de diriger automatiquement cet utilisateur vers ce service, lors de la première utilisation de la carte 2, pour l'aider à mettre en route la carte 2.

Une application (de type connue) dans l'appareil 40 notamment de téléphonie mobile reconnait que l'information lue dans le transpondeur est une adresse URL et propose à l'utilisateur de se connecter. Idem pour le numéro de téléphone.

Le cas échéant, l'invention peut prévoir de lire (comme pour le code PUK) l'ensemble des codes d'accès associées aux données ou informations stockées dans la mémoire 10, tel que l'URL et/ou le numéro de téléphone avec ou sans l'information associée tel que l'URL ou le numéro de téléphone et de proposer à l'utilisateur de les stocker individuellement (URL ou numéro de téléphone ou leur code d'accès respectif) ou ensemble (URL et/ou numéro de téléphone et/ou leur code d'accès respectif)dans l'appareil. L'application peut aussi proposer de s'en servir dans l'immédiat pour contacter le service notamment un service clientèle associé. Alternativement, l'utilisateur a stocké les informations dans l'appareil grâce à une application dédiée et leur libération est conditionner à la présentation du transpondeur à l'appareil de manière qu'il puisse lire un code utilisateur autorisant la libération des informations.

Ainsi par exemple, si l'utilisateur a besoin d'une information, il lui suffit de sélectionner dans un menu de l'appareil 40 la désignation correspondante à l'information et l'application va interroger le transpondeur pour lire un code d'autorisation dans le transpondeur. Le retour de ce code ou d'un signal d'autorisation peut être contrôlé notamment conditionné à une identification / authentification du porteur du transpondeur notamment grâce à un moyen d'identification / authentification par capteur d'empreinte comme expliqué précédemment.

A la limite, l'information stockée peut comprendre le code PIN de la carte et/ou le code PUK ou toute information liée à l'utilisateur et/ou élément à puce électronique 8.

Par exemple, en cas d'erreur de code PIN à la seconde saisie sur le clavier de l'appareil, une application de l'appareil (ou de l'élément à puce 8) peut proposer de récupérer le code PIN à partir du transpondeur 18, 10-30 et de lancer la lecture du transpondeur en cas d'acceptation. La lecture peut être ou non associée à une étape préalable d'identification /authentification.

Le transpondeur 18, 10-30 peut être configuré pour transmettre des données enregistrées dans la mémoire 10, vers un dispositif de lecture 40, en réponse à une requête (par exemple un signal radiofréquence de lecture) émise par ce dispositif de lecture. A cet effet, le transpondeur comporte une antenne radiofréquence 18.

Par exemple, le corps 4 peut être surmoulé ou obtenu par lamination de feuilles sur un substrat comportant l'antenne 18.

Dans cet exemple, le transpondeur 12 est de préférence configuré pour fonctionner suivant le protocole de communication en champ proche communément abrévié « NFC » (pour « near-field communication » en langue anglaise) et défini par l'association « NFC Forum ».

Ce transpondeur radiofréquence 18, 10-30 est électriquement connecté à la mémoire 10. Ici, ce transpondeur n'est pas configuré pour échanger directement des données avec la puce 8. Notamment, la carte 2 ne comporte pas de liaison filaire de données reliant directement la puce 8 au transpondeur 12.

Avantageusement, le corps 4 peut comporter un module logique 20 de gestion d'accès à la mémoire 10. Ce module de gestion 20 peut être configuré pour n'autoriser la transmission de données contenues sur la mémoire 10 que lorsqu'un identifiant ou code associé à la puce 8 est reçu par le transpondeur 18, 10-30.

Dans cet exemple, la puce 8 est identifiée de manière unique par un identifiant, tel que le code IMSI (« International Mobile Subscriber Identity » en langue anglaise). Le corps 4 comporte de manière enregistrée dans la mémoire 10, un code d'accès associée de façon unique à cet identifiant. Le code d'accès, à comparer par le module de gestion, peut être l'IMSI lui-même.

Comme déjà évoqué, le module de gestion 20 peut être configuré pour n'autoriser l'envoi, par le transpondeur radiofréquence, des données de sécurité de la mémoire 10 qu'en réponse à une requête comportant le code d'accès associée de façon unique à cet identifiant (tenant rôle d'identifiant associé à la puce 8). Ce code d'accès est par exemple comparé à celui stocké dans le corps 4 (ou transpondeur radiofréquence) et les données de sécurité de la mémoire 10 ne sont transmises / accessibles ou libérer que si ce code d'accès correspond à celui stocké. Les données ou informations ne sont pas transmises dans le cas contraire. Ainsi, grâce à l'invention il est possible de transmettre des données notamment de sécurité PUK qu'à un appareil de communication mobile utilisant la puce 8 de l'élément 6.

Avantageusement, come évoqué précédemment, ce module de gestion 20 peut être également configuré pour autoriser l'envoi, par le transpondeur radiofréquence 18, 10-30, des données de carte de visite du support 10 lorsque le transpondeur 12 reçoit une requête comportant une instruction de lecture des données de carte de visite.

Avantageusement, comme évoqué précédemment, la carte 2 peut comporter un dispositif de sécurité 30, configuré pour empêcher la transmission, par le transpondeur 12, de données enregistrées sur le support 10 tant que l'élément 6 n'a pas été détaché du corps 4.

La figure 2 représente plus en détail un exemple de ce dispositif 30. Ce dispositif peut comporter un contrôleur 32 et un circuit électrique 34, électriquement connecté au contrôleur 32. Une portion de ce circuit 34 est en outre incorporée dans la liaison 14 qui attache l'élément 6 au corps 4, de manière à ce que :
- lorsque la liaison 14 n'est pas rompue (et donc lorsque l'élément 6 est attaché au corps 4), le circuit 34 soit électriquement conducteur, et
- lorsque la liaison 14 est rompue (et donc que l'élément 6 est détaché du corps 4), ce circuit 34 ne soit plus électriquement conducteur.

Le contrôleur 32 est ici configuré pour empêcher le fonctionnement du transpondeur radiofréquence tant que le circuit 34 est électriquement conducteur, par exemple en court-circuitant la mémoire 10, de manière à ce qu'un signal électrique transmis par l'antenne 18 du transpondeur en réponse à un signal radiofréquence ne puisse pas atteindre la mémoire 10 pour accéder aux données ou informations contenues dedans.

Dans cet exemple, le circuit 34 comporte une piste électriquement conductrice, présentant essentiellement la forme d'une boucle fermée. Cette piste s'étend depuis le contrôleur 32 (ici placé sur le corps 4) jusque sur l'élément 6 en passant par les liaisons 15 et 16 de sorte que chacune de ces liaisons 15 et 16 comporte une branche de cette boucle. La rupture d'une des liaisons 15 ou 16 conduit à la rupture de la piste passant par cette liaison. Lorsque cette piste est ainsi rompue, elle n'est alors plus électriquement conductrice. On rappelle que cette piste et circuit 34 sont facultatif. L'élément à puce 6 n'est pas nécessairement relié électriquement au transpondeur 18, 10-30 dans la zone 60.

En empêchant la transmission des données enregistrées sur la mémoire 10 (et notamment des données de sécurité liées à la puce 8), tant que l'élément 6 n'a pas été détaché du corps 4, le risque que ces données soient lues de façon non autorisée, tant que la carte 2 n'a pas été remise à son destinataire légitime (par exemple lorsque cette carte 2 est en cours de livraison vers son destinataire légitime), est limité. Ainsi, la sécurité de la carte 2 est améliorée.

La figure 3 représente la carte 2 dans laquelle l'élément 6 est détaché du corps 4. L'élément 6 est utilisé indépendamment du corps 4 et de la mémoire 10. Comme évoqué précédemment, la puce 8 (ou carte mini-SIM) est notamment insérée dans un appareil de communication mobile 40, de manière à ce que cet appareil 40 soit apte à lire des données enregistrées sur la puce 8.

Cet appareil 40 est, par exemple, un téléphone portable comportant un dispositif de lecture compatible avec la technologie NFC. Cet appareil 40 est ainsi apte à lire des données enregistrées sur la mémoire 10, par exemple par émission d'une requête 42 (contenant l'identifiant) à destination du transpondeur 18, 10-30, puis, ensuite, par lecture d'un signal radiofréquence réémis, en réponse, par ce transpondeur et contenant des données (informations) enregistrées dans la mémoire 10.

Les données enregistrées sur la mémoire 10, telle que par exemple la clé personnelle de déverrouillage de la puce 8, sont ainsi transmises de façon simplifiée et plus fiable vers l'appareil 40 et vers la puce 8. En outre, la puce 8 et la mémoire 10 étant placés sur une même carte 2, ils sont tous deux personnalisables lors d'une même étape ou étapes proches d'un procédé de personnalisation.

Par personnalisation d'un support électronique, on entend ici notamment le transfert de données ou informations personnelles ou spécifiques enregistrées sur ce support électronique. Ici, ces données spécifiques sont associées à l élément 6 et peuvent comprendre notamment des données de sécurité PUK pour authentifier un abonné à un service de télécommunications.

Les informations stockées, peuvent comprendre un code d'accès à ces informations. Ce code d'accès comme évoqués précédemment peut comprendre un identifiant de l'élément IMSI ou tout autre code prédéfini à l'avance. Ce code d'accès (et/ou ces informations) peut être modifié ultérieurement par l'utilisateur notamment à l'aide de son appareil selon une procédure de réécriture ou d'initialisation décrite ci-dessous.

Le procédé de fabrication de la carte 2 est donc simplifié. La séparabilité de l'élément 6 du corps 4 permet d'utiliser le corps 4 indépendamment de l'élément 6. Enfin, en utilisant le corps 4 pour y placer le transpondeur avec sa mémoire 10, un utilisateur de la carte 2 est incité à conserver le corps 4. Il n'est ainsi plus nécessaire à un tel utilisateur de jeter le corps 4 après réception de la carte 2 (ce qui se produisait typiquement alors), ce qui permet de réduire la quantité de déchets générée suite à l'utilisation de la carte 2.

La figure 4 représente un exemple d'un procédé de personnalisation de la carte 2.

Lors d'une étape 43, une carte 2 est fournie sans être personnalisée c-à-dire que la puce 8 ne comporte pas toutes les données ou informations notamment droits d'usage de l'utilisateur et la mémoire 10 ne comporte les informations associées à la puce (notamment pas les données de sécurité PUK, IMSI, code d'accès,) et/ou les informations ou données associées à l'utilisateur de l'élément à puce électronique 8 (empreinte digitale, carte de visite, CV, empreinte données biométriques ...).

Puis, lors d'une étape 44, des données ou informations sont écrites sur la puce 8. Ces données permettent par exemple à un utilisateur de disposer d'un droit d'usage à un service, tel qu'un service de télécommunications mobiles ou financier ou d'accès logique ou physique ou autre. Ces données comportent notamment l'affectation d'un code IMSI à cette puce et à l'écriture de ce code IMSI dans cette puce 8.

Lors d'une étape 45, les données de sécurité (comme la clé personnelle de déverrouillage PUK) sont enregistrées sur le transpondeur 18, 10-30 du corps 4. Par exemple, ces données sont recherchées dans une table de correspondance à partir du code IMSI enregistré dans la puce 8 lors de l'étape 44.

Toute information ou donnée destinée à la puce radiofréquence peut résulter de cette table de correspondance. En particulier, les informations associées à l'utilisateur (Carte de visite, nom adresse. Ces informations peuvent être aussi imprimées pour partie (nom, adresse) sur le support pour une distribution à l'utilisateur au cours d'une personnalisation graphique du support.

A cet effet, le support peut comprendre une feuille ou une enveloppe portant dessus l'élément à puce électronique 6. La feuille ou l'enveloppe peut constituer le corps 4 ou porter le corps 4 et l'élément à puce électronique 6.

Le transpondeur 10-30 peut être supporté (ou noyé) par au moins une partie 60 de la feuille (plus ou moins rigide ou cartonnée comme une carte de visite) ou enveloppe peut être extrait d'une partie de la feuille ou de l'enveloppe. La partie 60 peut être au format carte de visite.

Avantageusement, lors d'une étape 46, les données ou informations personnelles de l'utilisateur à qui est destinée la carte 2 sont enregistrées dans la mémoire 10.

Un exemple d'utilisation de la carte 2 va maintenant être décrit, en référence au procédé de la figure 5 et à l'aide de la figure 3.

Lors d'une étape 50, une carte 2 est fournie, dont la mémoire 10 comporte des données personnelles de sécurité PUK relatives à la puce 8.

Puis, lors d'une étape 52, l'élément 6 est détaché du corps 4, pour, notamment, permettre l'utilisation de cet élément 6 comportant la puce 8, indépendamment du corps 4. Cet élément 6 est, par exemple, inséré dans l'appareil 40.

Puis, lors d'une étape 54, des données enregistrées dans la mémoire 10 sont transmises par le transpondeur 10-30 à l'aide de l'antenne 18 vers l'appareil 40. Par exemple, ces informations sont requises par l'appareil 40 pour assurer le fonctionnement de la puce 8 (notamment connexion au réseau de téléphonie, déblocage, ...).

L'appareil 40 émet le signal radiofréquence 42 à destination du corps 4 et transpondeur radiofréquence pour lire ces données.

De nombreux autres modes de réalisation sont possibles comme ceux évoqués précédemment

La puce 8 peut être utilisée pour accéder à des services des autres que ceux de télécommunications mobiles, comme par exemple des droits de transactions financières (porte-monnaie électronique, carte bancaire) ou encore des droits d'accès à un bâtiment.

Le corps 4 comme évoqué, peut en outre comporter une zone de découpe 60 (figures 1 et 3), par exemple ménagée par poinçonnage, autour de l'ensemble formé par la mémoire 10, le transpondeur comportant ou étant associé au module de gestion 20 et/ou au dispositif de sécurité 30 (intégrables tous ou partie dans un seul microcontrôleur radiofréquence). Ainsi, des bords du corps 4 peuvent être facilement sectionnés pour que la partie du corps 4 comportant le transpondeur présente, après découpe, un format réduit, facilitant ainsi son transport et son utilisation comme carte de visite électronique.

Ce format réduit est par exemple le format d'une carte de visite. Par exemple, ce format réduit est un rectangle dont les côtés présentent des longueurs supérieures ou égales à 20mm ou à 40mm et inférieures ou égales à 100mm ou à 90mm ou à 80mm. Pour simplifier, cette zone 60 présente une forme carrée sur les figures 1 et 3.

Le corps de l'élément 6 et le corps 4 peuvent être réalisés dans un autre matériau et/ou par un autre procédé de fabrication. Par exemple, le corps 4 comporte un support en carton ou en papier synthétique, comportant le transpondeur radiofréquence et sur lequel est collé, de façon détachable, l'élément 6. De préférence, ce support présente un format de carte de visite. L'élément 6 peut également être surmoulé sur ce support. Dans ce cas, ce support peut comporter avantageusement un revêtement présentant une adhérence réduite sur l'emplacement où l'élément 6 est surmoulé, de manière à faciliter le retrait de cet élément hors du support 6 par un utilisateur. En collant l'élément 6 sur un support présentant un format de carte de visite, il n'est pas nécessaire d'inclure la zone de découpe 60 pour obtenir ce format de carte de visite. En outre, l'aspect du support est amélioré, puisqu'il ne comporte ainsi pas l'évidement 7.

L'élément 6 peut présenter d'autres formats, comme, par exemple, les formats « 3FF » ou « 4FF » tels que définis par la norme internationale « ETSI 102 221 », publiée par l'organisme « European Télécommunications Standard Institute ».

L'élément 6 peut comporter une troisième carte, sur laquelle est placée la puce 8 et présentant des dimensions inférieures à l'élément 6 et étant en outre configuré pour être détachable de l'élément 6. Ainsi, l'élément 6 est utilisable comme adaptateur entre différents formats de carte.

La mémoire 10 peut comporter une mémoire autre qu'une mémoire flash. Par exemple, la mémoire 10 comporte une mémoire effaçable et programmable électriquement (EEPROM, pour « Electrically Erasable Programmable Read-Only Memory » en langue anglaise). En variante, si la carte 2 ne comporte pas le module 20, alors la mémoire 10 peut inclure une mémoire morte.

Le transpondeur peut être réalisé différemment. En variante, le transpondeur est configuré pour fonctionner suivant un autre protocole de communication que le protocole NFC.

La liaison 14 peut être réalisée différemment. Par exemple, la liaison 14 comporte plus de deux liaisons 15 et 16. Alternativement, cette liaison 14 est réalisée en définissant une zone de découpe aux dimensions souhaitées le long du pourtour de l'élément 6, par exemple par poinçonnage.

Le module 20 peut être omis. De même, le dispositif 30 peut être omis. Le dispositif 30 peut être réalisé différemment. Par exemple, le circuit 34 peut ne passer que dans une seule des liaisons 15 ou 16.

L'utilisateur peut réécrire dans la mémoire 10 à l'aide de l'appareil. Une application logicielle dans le contrôleur de l'appareil ou et/ou dans l'élément 6 à puce électronique propose sur sélection de l'utilisateur dans un menu, la saisie de différent champs apparaissant sur l'écran de l'appareil comme des informations de carte de visite à modifier ou réécrire (numéro de téléphone, adresse, fonction, ...).

L'application logicielle peut requérir ensuite un code d'accès à la mémoire 10 pour une réécriture.

Ce code peut avoir été préalablement stocké dans le transpondeur notamment dans le module de gestion des accès 20 ou contrôleur 32, par exemple au cours de l'étape de personnalisation. Ce code peut ou non être identique à une information stockée dans la puce 8 tel que le code PIN, ou PUK.

Soit, le code est saisie par l'utilisateur, soit il peut être libéré du transpondeur comme ci-après.

Le cas échéant, pour libérer le code d'accès autorisant une réécriture, l'utilisateur peut devoir au préalable s'authentifier auprès de l'appareil via un capteur biométrique du support 2 tandis que l'appareil émet un champ radiofréquence vers le transpondeur radiofréquence 10-30 pour l'alimenter. Dans le cas d'un transpondeur actif avec batterie.

Alternativement Le code d'accès ou un signal d'autorisation peut être émis par un transpondeur NFC actif (comme évoqué précédemment) en réponse à une authentification notamment biométrique. Le signal est transmis à l'appareil ou il libère l'accès en réécriture du champ sélectionné par l'utilisateur.

Le corps 4 peut être fourni ensemble ou séparément avec l'élément 6. Le support 4 peut être distribué.

Selon un mode préféré de mise en oeuvre du procédé de personnalisation d'un support électronique 2, l'invention prévoit une étape de configuration du transpondeur (18-10-30) pour permettre une communication automatique d'informations enregistrées sur la puce radiofréquence 10-30 avec l'appareil (40) de communication radiofréquence.

Les informations ci-dessus stockées dans la puce radiofréquence sont de préférence liées ou associées à l'élément à puce électronique (8). Elles peuvent être alternativement ou cumulativement liées ou associées à l'utilisateur dudit élément.

Le procédé de personnalisation d'un support électronique 2 selon un mode préféré de l'invention, peut prévoir une étape de configuration du transpondeur 18-10-30. Cette étape permet une communication automatique (ou contrôlée) ou non des informations selon que lesdites informations sont liées à l'élément à puce électronique (8) ou à l'utilisateur dudit élément.

Ainsi, comme mentionné précédemment, l'invention peut prévoir d'associer un code d'accès aux informations associées ou liées à l'élément à puce. Seul l'utilisateur connaissant ou ayant initialisé une application dédiée dans l'appareil (ou élément à puce quelconque associé) avec ce code d'accès notamment lors de la mise en route (décrit précédemment) peut récupérer ces informations de sécurité.

Par contre, l'utilisateur peut choisir de ne pas conditionner la lecture, transmission ou libération de ses informations personnelles notamment celles relatives à la carte de visite à la réception d'un code d'accès à la zone mémoire contenant ces informations. Dans ce cas, il peut être possible à toute personne disposant d'un appareil de lecture NFC de réceptionner ces informations personnelles sans disposer de code d'accès. L'invention peut prévoir une zone mémoire non soumis à un contrôle d'accès.

Les espaces mémoires de la mémoire 10 contenant les différentes informations peuvent être gérées par une table d'accès mémoire.

La table d'accès mémoire placée notamment dans le module de gestion des accès ou dans le contrôleur 32 peut être paramétrable ou modifiée par l'utilisateur ou au stade de la personnalisation.

D'une manière générale, les moyens de gestion peuvent être remplacés par un mécanisme ou protocole spécifique à l'effet équivalent de contrôle des accès aux informations. Ils peuvent notamment permettre de lire l'information dans un espace mémoire si l'espace mémoire ou l'information contient un code d'accès dédié associé à l'espace mémoire ou à l'information.

Alternativement, ces informations personnelles peuvent être émises par le transpondeur dans la version active (avec batterie).

L'utilisateur peut avoir à presser un interrupteur ou s'authentifier sur un capteur biométrique (d'empreinte digitale) pour permettre la libération de ces informations personnelles à destination d'un appareil de lecture ou un autre transpondeur actif ou passif similaire ou identique à celui de l'invention (considéré alors en tant qu'appareil de communication lui-même).

## Revendications

1. Support électronique (2) comprenant :
- un corps (4);
- un élément (6) à puce électronique (8) détachable du corps, ladite puce électronique (8) incluant des droits d'usage d'un utilisateur (IMSI, Ki, PIN, PUK);
- un transpondeur (60) à puce radiofréquence (10-30) stockant des informations, fixé au corps, ledit transpondeur (18, 10-30) étant configuré pour permettre une communication radiofréquence d'informations enregistrées sur la puce radiofréquence (10-30); **caractérisé en ce que** lesdites informations sont associées à l'élément (6) à puce électronique (8) ou à l'utilisateur,
et **en ce qu'**il comprend des moyens de contrôle de la communication desdites informations à un appareil de communication radiofréquence (40).

2. Support selon la revendication 1, dans lequel lesdites informations comprennent des informations de sécurité telle qu'une clé personnelle de déverrouillage (PUK) de la puce électronique (8).

3. Support selon la revendication 1, dans lequel lesdites informations comprennent des informations personnelles de carte de visite de l'utilisateur, informations d'urgence, de secours, vitales propre à l'utilisateur ou informations choisies par l'utilisateur.

4. Support selon la revendication 1, dans lequel lesdites informations comprennent des informations permettant de joindre le prestataire du droit d'usage, notamment adresse internet (URL), numéro de téléphone.

5. Support selon la revendication 1, dans lequel le corps (4) constitue un corps de carte à puce, un corps de carte de visite, une feuille de lettre ou une enveloppe.

6. Support selon la revendication 1, dans lequel la feuille de lettre ou l'enveloppe comprend une zone (60) prédéfinie ou prédécoupée, ledit transpondeur (18, 10-30) étant dans cette zone.

7. Support selon la revendication 1, dans lequel ladite zone (60) a un format de carte à puce ou de carte de visite.

8. Support selon la revendication 1, dans lequel le transpondeur à puce radiofréquence (10-30) comporte un moyen de gestion ou de contrôle d'accès (20) aux informations.

9. Support selon la revendication 1, dans lequel le transpondeur à puce radiofréquence (10-30) est configuré pour autoriser la communication des informations de sécurité contenues dans une mémoire (10) de cette puce radiofréquence uniquement en réponse à une requête, reçue par le transpondeur (18-10-30) à puce radiofréquence (10-30) comportant un identifiant ou code associé à la puce électronique (8).

10. Support selon la revendication l'une des revendications précédentes, comportant un dispositif de sécurité (30) configuré pour empêcher de délivrer, par le transpondeur ((18-10-30), des informations stockées sur la puce radiofréquence (10-30) tant que l'élément détachable (6) n'a pas été détaché du corps (4).

11. Support selon la revendication précédente, dans lequel:
- l'élément à puce électronique (2) comporte une liaison mécanique sécable (15, 16) reliant mécaniquement le corps de carte (4) à l'élément détachable (6) ;
- le dispositif de sécurité (30) :
• comporte un circuit électrique (34) dont une piste électriquement conductrice est incorporée à l'intérieur de la liaison mécanique sécable (15, 16), ladite piste n'étant plus électriquement conductrice lorsque la liaison mécanique sécable est rompue ;
• est configuré pour empêcher la lecture de la mémoire (10) tant que ladite piste est électriquement conductrice.

12. Procédé de personnalisation d'un support électronique (2) comprenant :
- un corps (4),
- un élément (6) à puce électronique (8) détachable du corps (4),
- un transpondeur (18, 10-30) à puce radiofréquence (10-30),
ledit procédé comprenant une étape de stockage de droits d'usage d'un utilisateur (IMSI, Ki, PIN, PUK) dans la puce électronique ; ledit procédé comprenant une étape de stockage d'informations dans le transpondeur à puce radiofréquence ;
**caractérisé en ce que** lesdites informations sont associées à l'élément (6) à puce électronique (8) ou à l'utilisateur,
et **en ce qu'**il comprend une étape de configuration du transpondeur (18-10-30) de manière à permette une communication contrôlée desdites informations à un appareil de communication radiofréquence (40).

13. Procédé de personnalisation d'un support électronique (2) selon la revendication précédente, **caractérisé en ce que** l'étape d e configuration du transpondeur (18-10-30) permet une communication automatique ou non des informations selon que lesdites informations sont liées à l'élément à puce électronique (8) ou à l'utilisateur dudit élément.
